Europäisches Patentamt

European Patent Office

Office européen des brevets

(19)

(11) Publication number: **0 021 782**
**B1**

## (12) EUROPEAN PATENT SPECIFICATION

(45) Date of publication of patent specification: **15.08.84**

(51) Int. Cl.³: **B 65 G 47/30**

(21) Application number: **80302044.5**

(22) Date of filing: **17.06.80**

(54) An unscrambling conveyor.

(30) Priority: **18.06.79 US 49318**

(43) Date of publication of application:
**07.01.81 Bulletin 81/1**

(45) Publication of the grant of the patent:
**15.08.84 Bulletin 84/33**

(84) Designated Contracting States:
**DE FR GB IT NL**

(56) References cited:
**DE - A - 2 516 085**
**DE - A - 2 643 709**
**GB - A - 689 322**

(73) Proprietor: **LEAR SIEGLER, INC.**
**507 Plymouth Avenue North East**
**Grand Rapids Michigan (US)**

(72) Inventor: **Brouwer, Gerald Allan**
**4210 Pineview South West**
**Grandville Michigan (US)**

(74) Representative: **Robinson, Anthony John Metcalf**
**et al,**
**Kilburn & Strode 30 John Street**
**London, WC1N 2DD (GB)**

Courier Press, Leamington Spa, England.

## Description

This invention relates to unscrambling conveyors for unscrambling and organizing randomly received articles.

In many conveyor operations, it is either desirable or necessary to sort out and arrange in single file in an oriented fashion numerous articles received in a random pattern from a number of infeed conveyors. The devices used to perform this function are referred to as unscramblers. They perform the service of sorting out the articles and automatically transferring them to one side of the conveyor where they will become aligned and will be discharged in single file. At the same time, elongated articles will normally be oriented with their greater dimension aligned in the direction of movement of the discharge conveyor. An unscrambling conveyor has been described in US—A—4 039 074 and the corresponding GB—A—1 509 668 which has sides and a plurality of parallel rollers mounted between the sides with their axes skewed to the axes of the sides, the rollers forming an elongated conveying surface with the rollers upstream of the direction of article movement along the surface converging toward one side of the conveyor, and an article engaging rail along said one side, the surface being divided into a plurality of zones, the zones interfacing along split lines extending across the unscrambler at an acute angle relative to sides thereof in the direction of container movement and power means being provided for driving the rollers of each zone at a speed which increases from zone to zone. This invention constitutes an advance in the art over the unscrambler described in that patent specification.

According to the present invention, the unscrambling conveyor is characterized in that each separator frame being spaced from and extending parallel to both sides of the conveyor, and in that the article engaging rail is divided lengthwise into a plurality of separate segments and there are means independently supporting each of the segments at a fixed or adjustable angular position with respect to said side (11a) of the conveyor.

The effect of this construction is to provide extended regions of overlap between the zones, the effect in each region being threefold. Firstly, there is a zone of substantial length on the outside of the divider frame, i.e. on the side of the divider frame remote from the said one side to which the articles are biased, in which articles therein are accelerated and moved ahead of articles on the inside of the divider frame. Secondly, there is a zone of substantial length over which some articles will span the divider frame and hence be partially supported by rollers from both overlapping zones, such rollers operating at different speeds, thus causing such articles to spin about a vertical axis. Both of these functions facilitate separation of the articles on the conveyor from one another and their rearrangement into single file. Also, the rail is divided lengthwise into a plurality of separate segments and there are means independently supporting each of the segments. This enables the segments to be arranged in such a way that there is a discontinuity between the end of one segment and the beginning of the next, thus producing the third effect which is to produce jostling of the articles passing along the rail. This assists in the elimination of hang-up between articles which get entangled with one another and also encourages articles to become orientated with their longer dimensions extending lengthwise of the conveyor. By combining the overlapping and the segmental rail, there results an unscrambler having the capacity to accurately handle, arrange and discharge in single file alignment a large number of articles at high speeds with the overall length of the unscrambler being substantially less than has heretofore been possible to accomplish the same capacity. Further, the unscrambler has a reduced failure rate, that is, a greater percentage of the articles are effectively oriented and aligned. It is not necessary to include a retardation rail having a high friction surface. This is desirable because experience with existing unscramblers utilizing a high friction retardation rail has indicated that such rails are a problem because the articles passing through the conveyor tend to rapidly polish the rail, thus, reducing its efficiency.

The invention may be carried into practice in various ways but one unscrambler conveyor embodying the invention will now be described by way of example with reference to the accompanying drawings, in which:

Figures 1 and 1A are schematic plan views of an unscrambler incorporating this invention;

Figure 2 is an enlarged, plan view of the drive frame for one of the zones of the unscrambler;

Figure 3 is a fragmentary, enlarged plan view of a typical zone of the unscrambler including an overlap zone having a double separator frame;

Figure 4 is a fragmentary, enlarged plan view of a zone overlapping a portion of the unscrambler having a single separator frame;

Figure 5 is a fragmentary plan view of portions of several zones of the unscrambler with the rollers indicated in phantom for clarity;

Figure 6 is a fragmentary, sectional view taken along the plane VI—VI of Figure 3;

Figure 7 is a fragmentary plan view taken along the plane VII—VII of Figure 6;

Figure 8 is a side, elevational view of one of the rail segments;

Figure 9 is a fragmentary, elevational view taken along the plane IX—IX of Figure 6; and

Figure 10 is a sectional, elevational view of the drive frame taken along the plane X—X of Figure 2.

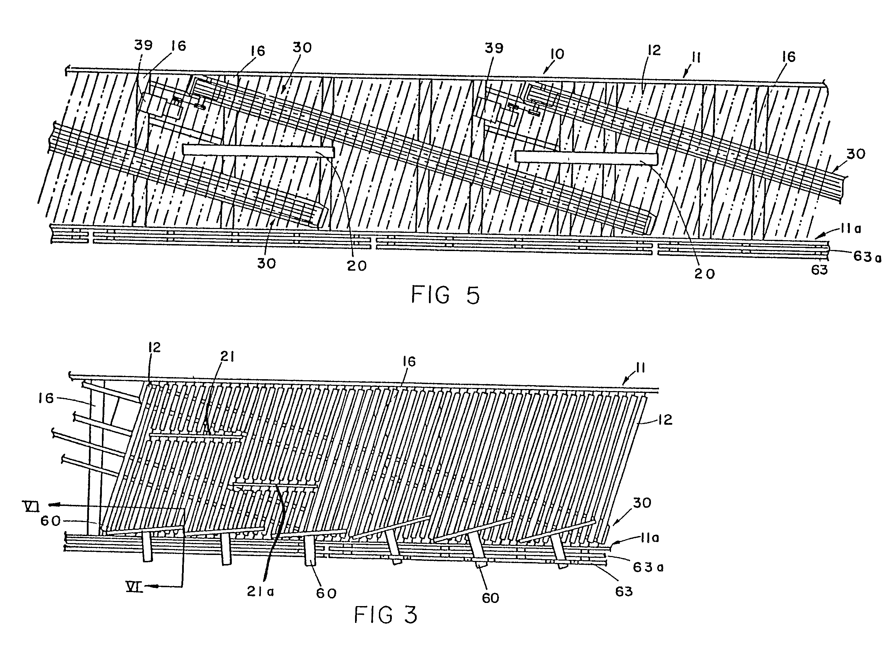

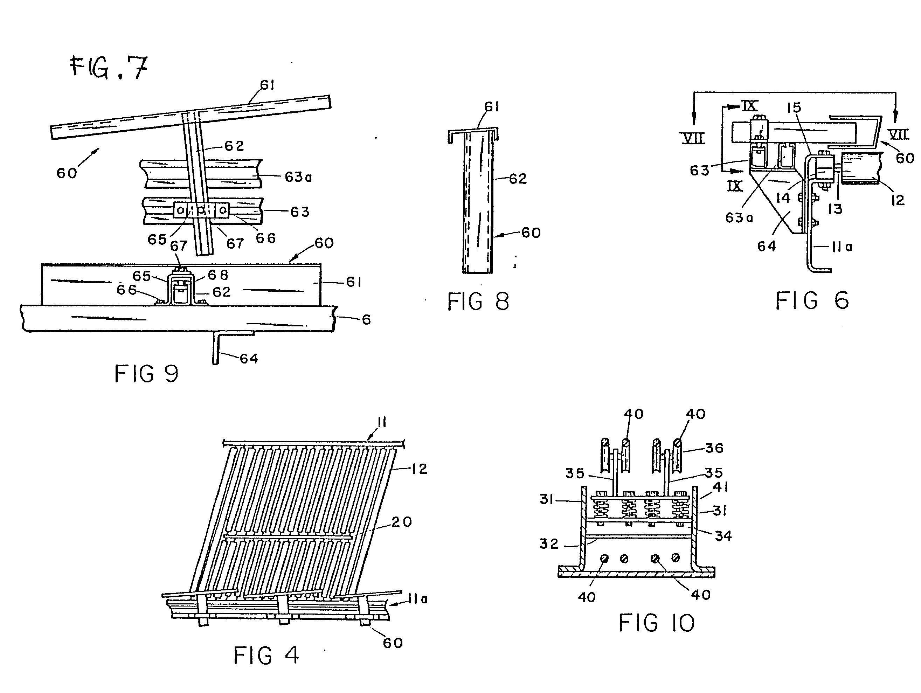

The drawings show a conveyor 10 having side frame members 11 and 11a. Mounted between the side frame members are a plurality of rollers 12 which form the article supporting and transporting surface for the unscrambler. In Figure 5, these rollers 12 are schematically illustrated for the sake of clarity. The rollers are of conventional construction having a stub shaft 13 (Figure 6) at each end. The ends of the shafts 13 are mounted in support bearings 14 seated on the side frame members 11, 11a and are held in place by bearing covers 15. The rollers 12 are skewed with respect to the side frame members 11, 11a and arranged to be convergent with the side frame member 11a upstream of the direction of article movement over the unscrambler. Beneath the rollers 12, the side frame members 11 and 11a are rigidity tied together by cross members 16 (Figures 3 and 5).

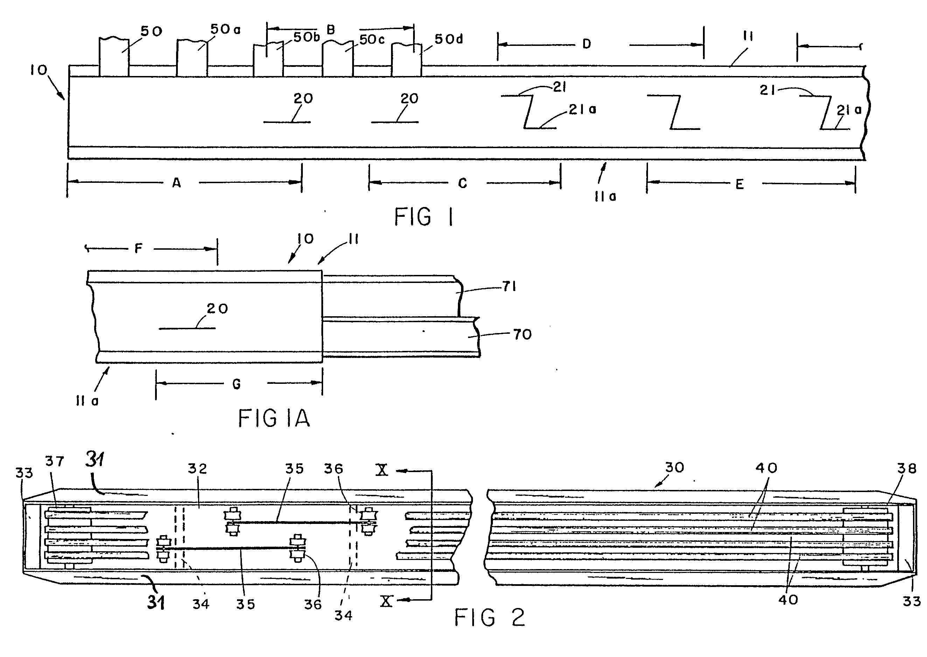

The rollers 12 are arranged in zones which are designated in Figures 1 and 1A as zones A—G. Lengthwise of the conveyor each zone overlaps an adjacent zone. In the area of overlap, the rollers are split or segmented, that is, the rollers do not extend the full width of the conveyor, the conveying surface being formed by two aligned roller sections, each capable of independent operation (Figures 3, 4). Where the rollers (12) are divided or split, the conveyor is provided with a separator frame 20 (Figures 4, 5) or a pair of separator frames 21 and 21a (Figures 1, 3), depending upon the design of the zone overlap. In the case where only a single separator frame 20 is required, the frame 20 preferably is positioned closer to the side frame 11a than to the side frame 11 (Figure 4). Where a pair of the separator frames 21 and 21a are utilized, the downstream end of the upstream one 21 of the separator frames is located in the same gap between a pair of the rollers 12 as the upstream end of the downstream one 21a of the separator frames. As indicated in Figures 1 and 1A, because of the skewed arrangement of the rollers, this gives the boundary between the overlapping zones the appearance of a "Z". However, it must be understood that where these zones overlap, there is no continuous roller extending the full width of the conveyor surface. The separator frames 20, 21 and 21a are rigidly supported from underneath on the cross members 16.

The rollers 12 in each zone A—G are powered separately from the rollers in each adjacent zone. Thus, the driving means for the rollers 12 in zone A is separate from the driving means for the rollers in zone B. The same is true of each of the other zone C to G. Because the rollers 12 in each zone are skewed with respect to the side frames 11 and 11a, it is necessary that the driving means for the rollers also be skewed so that the contact between the driving belts is at a right angle to the axis of the rollers. Any other arrangement would result in excessive wear.

To drive the rollers 12 in each zone A—G, a separate drive frame assembly 30 is provided (Figures 2, 5). Each drive frame assembly 30 consists of a pair of upstanding side members 31 between which is mounted a plate 32 (Figures 2 and 10). The sides 31 are tied together by end pieces 33 (Figure 2) and suitable intermediate supports 34. Mounted on the plate 32 are vertically floating supports 35, each of which has a pair of drive belt-supporting pulleys 36 at each end. At one end, each of the drive frames 30 has a drive pulley 37 and an idler pulley 38 at the other end. A power source 39 (Figure 5) is provided for each individual drive frame 30. Trained over the pulleys 37 and 38 are four, spaced, drive belts or bands 40. Between the end pulleys 37 and 38, at suitable intervals, the drive belts 40 are supported by the floating supports 35 through the pulleys 36. Since the supports 35 float vertically and are resiliently supported on springs 41, the pulleys 36 support the belts 40 upwardly with sufficient force to ensure positive driving contact with the rollers 12.

As illustrated in Figure 1, the unscrambler has seven zones identified by the letters A to G. The number of zones is dependent upon the length of the unscrambler, the volume it is designed to handle and, to some extent, the circumstances under which it will be used. Each zone has its own separate drive frame 30. Since the drive frame 30 must be normal to the axis of the rollers, its maximum length is governed by the width of the conveyor 10 as is indicated in Figure 5. The wider the conveyor 10, the longer each drive frame 30 can be. However, for reasons of space requirement and cost, it is important to keep the width of the conveyor 10 to a minimum. However, the length of the individual articles in part governs the length of the individual drive frames 30 because it established a minimum length which must be used. Another governing factor is the angle at which the rollers 12 are skewed. The greater this angle, the shorter the drive frame assembly 30 for a given conveyor width. Thus, roller angles in excess of 15° are normally not practical because either the drive frame must be shortened or the conveyor width increased.

The equipment normally receives articles from several infeed conveyors such as the conveyors 50 and 50a, b, c, d (Figure 1A). These are illustrated as discharging into zones A and B. The infeed could be limited to zone A or could be extended to zones in addition to A and B. Because the equipment is an unscrambler, it is not necessary to regulate or coordinate the rate of discharge of articles from these infeed conveyors 50—50d. Progressively from infeed to discharge end, the rollers 12 in the respective zones are driven at progressively higher speeds. Exemplary of this, in zone A the rollers are driven at 6 m/min., in zone B, at 17.5 m/min., in zone C, at 28.5 m/min., in zone D, at 42 m/min., in zone E, at 57.5 m/min., in zone F, at 77.5 m/min., and in the last zone G, the drive is 122 m/min. In the initial and lower speed zones, the length of the overlap, such as between zones A and B, is less than the length of the overlap of each of the following zones. In the upstream, slower moving zones, a single separator frame 20 is used so there is only a single overlap area, whereas in the intermediate zones, a pair of the separator frames 21 and 21a are used. In the overlap between the next to the last and the final or discharge zones F and G, a single separator frame 20 is used because a this point, for all practical purposes, all of the articles have either reached their alignment position or are so close to it that the double frame 21, 21a, double overlap arrangement will not perform any significantly useful service.

Throughout the length of the unscrambler, along the side toward which the skewed rollers 12 bias the articles, a retard rail is provided above the side frame 11a and the surface of the rollers 12. This rail is divided into a plurality of segments 60 which overlie the rollers 12 (Figure 6). The length of each segment 60 is governed by the average length of the articles to be handled by the conveyor. The preferred length is approximately twice the length of the article. When articles of various lengths are involved, the length of the segments 60 is normally an average of the article lengths.

Each segment 60 is generally T-shaped, having a rail portion 61 and a support leg 62. As best shown in Figure 8, the face of the rail portion 61 is downwardly and outwardly inclined at a slight angle. This minimizes article contact. To support the rail segments 60, a pair of support bars 63 and 63a are mounted along the conveyor 10 externally of the side frame 11a by means of brackets 64 (Figure 6). Each segment 60 is secured to the outer support bar 63 by an anchor bracket 65 (Figure 9) which is secured to the outer support bar by bolts 66. The size of the brackets 65 is such that the supporting leg 62 not only can slide through the bracket 65 but, parallel to the surface of the support bars 63 63a, it can be pivoted through a substantial angle. This permits individual adjustment of each bracket 65. When the desired angle has been attained, the bracket 65 is locked into position by tightening a belt 67 which engages an anchor nut 68 (Figure 9). The inner of the bars 63a serves as a rest for the support leg 62, thus relieving the bracket 65 of vertical twisting motion.

In the preferred arrangement, the guard rail segments 60 are arranged at varying angles along the length of the unscrambler (Figure 3). In those areas of each zone, except the discharge zone G, where there is no zone overlap the brackets 65 are set at a substantial angle of inclination selected for the particular article with which the unscrambler is to be used. In a unit in which the rollers 12 are skewed at 15° to the side rails, the rail segments 60 are normally set at a preferred angle of 15° to the side frames 11, 11a. However, under certain circumstances this can be decreased or increased up to about 30°. In the reas of zone overlap, the angle at which the segments 60 are positioned is decreased for reasons which will be explained. In the final or discharge zone G, the segments 60 have little or no angularity and in a preferred arrangement they are arranged in tandem forming a continuous straight rail.

It will be understood that the angular position at which each of the segments 60 is positioned is such that its downstream end projects further out over the rollers than the upstream end. The purpose of so positioning the individual segments 60 is to cause jostling of the articles. This has several desirable effects. It tends to break up any combinations of articles which resist separation. It also serves the purpose of separating articles which otherwise become interlocked or hooked together and thereby travel in groups resisting rearrangement in a single file pattern. The jostling also materially reduces the length of the unscrambler necessary to sort, arrange and align a given number of articles.

The greater the inclination of the rollers 12 with respect to the side members 11, 11a, the greater the bias applied to the articles to line up along one side in suitable, single file pattern. However, as the angularity of the rollers 12 increases, the length of the rollers 12 also increases and such an arrangement quickly becomes economically prohibitive. Further, it has been found from past experience that simply attempting to provide a drag on the articles by using a guard or retard rail with a high friction surface is not effective from the stand point of durability because the sliding movement of the articles along the rail rapidly reduces the degree of frictional resistance to article movement and ultimately results in a polished surface with little or no resistance. By separating the rail into a plurality of segments 60 and setting each segment 60 at an angle, as has been described, the effect is the same as if the rollers were arranged at an inclination which is a combination of their angle to the side frames 11, 11a plus the angle of inclination of the individual segments 60. Thus, if the rollers 12 are skewed at 15° and the segments 60 are also set at 15°, the result is the same as if the rollers 12 were inclined at 30° to the side rail members 11, 11a but without requiring the roller length necessary for such an angular relationship. It will be seen that if the rollers 12 are set at 15° and the segments are set at 30°, the result is basically the same as if the rollers 12 had been skewed at 45°.

Because of the angular position of the segments 60, they tend to retard, pivot and jostle the individual articles. They also tend to retard the movement of the articles which have already shifted to the collection or bias side of the conveyor 10 thus facilitating and accelerating the by-passing of articles further out on the conveyor so that they will be in a position to be swept in against the bias or guard rail side 11, 11a of the conveyor 10. In the zones where there is an overlap and thus a translation of speeds, the angularity of the segments 60 is preferably reduced because in this zone the speed differential between the overlapping portions of the rollers 12 rather than the retardation of the articles on the bias side of the conveyor 10 is relied upon to effect reorganization and alignment of the articles.

The use of the dual lines of separation such as between zones C and D or D and E has an accelerating effect upon the equipment's ability to sort and align the articles. By having an abrupt speed change which occurs across a significant portion of the width of the conveyor surface, the outer or slower articles are suddenly accelerated. This helps to speed up the passage of the outer articles around the inner articles. Since the outer articles are accelerated, they are moved ahead of the adjacent inner articles and thus their inward movement toward the bias side of the rail 11a is no longer prevented by the inner articles.

Also by providing an elongated zone of speed differential extending parallel to the sides, many articles which enter the interzone speed transition area are made to pivot and twist. This has the dual effect of by-passing slower articles and breaking up groups of articles. By providing a pair of such speed transition areas at the interzone boundaries, these effects are repeated at each zone change, again increasing the effectiveness of the equipment per unit of length. This has the effect of decreasing the required length of the equipment.

As appears in Figure 1, the final or discharge section G discharges onto two conveyors 70 and 71. The conveyor 70 receives those articles which have been sorted, aligned and oriented single file. The other conveyor 71 is designed to receive those few articles which, for one reason or another, the unscrambler failed to align and arrange in a single file pattern. Conveyor 71 is a recycling conveyor which returns the articles it receives to the unscrambler to be recycled.

The double overlaps with their three sharply defined areas of speed change provide multiple points of abrupt acceleration of one group of articles over another rather than a progressive acceleration laterally of the conveyor 10. This has proven to be more effective in breaking up clusters of articles and in quickly moving the most recently received articles into a position to be forced against the rail segments and, thus, oriented and aligned. The result of this is the ability to sort more articles on a shorter piece of equipment. Tests have been successful in sorting cartons of canned beverage each 53 cms long at a rate of 72 cartons/minute in an overall length of 18.3 m. It will be recognized that the overall length of the unscrambler will be governed by the average length of the articles to be unscrambled because the length of both the transition or overlap zones and of the zones between the overlap are largely governed by the length of the articles. It will also be recognized that the range of speeds involved as well as the speed differential occurring between any two zones can be varied substantially, depending upon the size, type and other characteristics of the articles being conveyed.

**Claims**

1. An unscrambling conveyor (10) for unscrambling and organizing randomly received articles, the conveyor having sides (11, 11a) and a plurality of parallel rollers (12) mounted between the sides with their axes skewed to the axes of the sides, the rollers (12) forming an elongated conveying surface with the rollers (12) upstream of the direction of article movement along the surface converging toward one side (11a) of the conveyor (10), and an article engaging rail along said one side (11a), the surface being divided into a plurality of zones (A—G), and power means (30, 39) being provided for driving the rollers (12) of each zone at a speed which increases from zone to zone, each of the zones (A—G) overlaps each adjacent zone lengthwise of the surface with a separator frame (20, 21, 21a) at each of the areas of overlap, characterized in that each separator frame is spaced from and extends parallel to both sides (11, 11a) of the conveyor (10), and in that the article engaging rail is divided lengthwise into a plurality of separate segments (60) and there are means (62, 63, 63a, 65—68) independently supporting each of the segments (60) at a fixed or adjustable angular position with respect to said side (11a) of the conveyor.

2. A conveyor according to Claim 1 characterized in that the article-engaging surface of the rail (60) is smooth.

3. A conveyor according to Claim 1 characterized in that each mounting means comprises a support member (62) secured to said one side of the segment (60) and a bracket (65) securing the support member (62) to one of the sides (11a).

4. A conveyor as claimed in any of the preceding claims characterized in that at least some of the segments (60) are inclined to the said one side (11a) with the upstream end thereof converging toward the said one side (11a).

5. A conveyor as claimed in any of the preceding claims characterized in that some of the said inclined ones of the segments (60) are inclined at an angle in the range of 15° to 30° to the said one side (11a).

6. A conveyor as claimed in any of the preceding claims characterized in that the segment (60) adjacent the areas where the zones overlap are inclined at a lesser angle than the segments (60) adjacent areas between the overlaps.

7. A conveyor as claimed in any of the preceding claims characterized in that the mounting means permit adjustment of the segments (60) independently of each other as to both their angle of inclination to the said one side (11a) and their spacing from the said one side (11a) laterally of the conveyor (10).

8. A conveyor as claimed in any of the preceding claims characterized in that certain of the areas of overlap are provided with a pair of the said separator frames (21, 21a), the frames of the pair being parallel, laterally spaced from one another and offset lengthwise of the conveyor (10).

9. A conveyor as claimed in Claim 8 characterized in that the adjacent ends of the separator frames (21, 21a) of each pair are common to the space between a pair of said rollers (12) whereby the line of demarcation between said zones is Z-shaped with the line paralleling said rollers (12) extending between the separator frames (27, 27a) of the pair.

10. A conveyor as claimed in Claim 9 characterized in that the overlap between the first and second zones (A, B) at the upstream end between the discharge zone and the next adjacent upstream zone (F, G) both have single separator frames (20) and the overlaps between the intermediate zones (C, D, E) have a pair of separator frames (21, 21a).

11. A conveyor according to any of the preceding claims characterized by a separate power means (39) for the rollers (12) in each zone.

12. A conveyor as claimed in any of the preceding claims characterized in that the supporting means are adjustable for varying the angular relationships between the segments (60) and said one side (11a).

13. A conveyor as claimed in any of the preceding claims characterized in that the supporting means is adjustable both for varying the angular relationships between the segments (60) and the said one side (11a) and for varying the spacings laterally of the conveyor (10) between the segments (60) and the said one side (11a).

14. An unscrambling conveyor for unscrambling and organizing randomly received articles, the conveyor (10) having sides (11, 11a) and a plurality of parallel rollers (12) mounted between the sides with their axes skewed to the axes of the sides, the rollers (12) forming an elongated conveying surface with the rollers (12) upstream of the direction of article movement along the surface converging toward one side (11a) of the conveyor, and an article engaging rail along said one side (11a), characterized in that the rail is divided lengthwise into a plurality of separate segments (60) and there are means (62, 63, 63a, 65—68) independently supporting each of the segments (60) at a fixed or adjustable angular position with respect to said side (11a) of the conveyor.

15. A conveyor according to Claim 14 characterized in that some of said segments (60) are inclined to said one side (11a) with the upstream end thereof converging toward said one side.

16. A conveyor according to Claim 15 characterized in that the article engaging surface of the rail is smooth.

17. A conveyor as claimed in any of Claims 14 to 16 characterized in that the supporting means are adjustable for varying the angular relationships between the segments (60) and said one side (11a).

18. A conveyor as claimed in any of Claims 14 to 17 characterized in that the supporting means is adjustable both for varying the angular relationships between the segments (60) and the said one side (11a) and for varying the spacings laterally of the conveyor (10) between the segments (60) and the said one side (11a).

**Patentansprüche**

1. Sortierende Fördervorrichtung (10) zum Sortieren und Ordnen ungeordnet zugeführter Artikel, mit Seiten (11, 11a) und einer Mehrzahl paralleler Rollen (12), die mit bezüglich der Achsen der Seiten schrägstehenden Achsen zwischen den Seiten gelagert sind und eine langgestreckte Förderfläche bilden, wobei die Rollen stromaufwärts zur Bewegungsrichtung der Artikel längs der Förderfläche zur einen Seite (11a) des Förderers hin konvergieren, und mit einer längs der erwähnten einen Seite (11a) verlaufenden, an den Artikeln angreifenden Schiene, wobei die Förderfläche in eine Mehrzahl von Zonen (A—G) unterteilt ist und eine Lesitungseinrichtung (30, 39) vorgesehen ist, um die Rollen (12) jeder Zone mit einer Geschwindigkeit anzutreiben, die von Zone zu Zone zunimmt, wobei die Zonen (A—G) jeweils die benachbarte Zone in Längsrichtung der Förderfläche überlappen und in jedem Überlappungsbereich eine Trennrahmen (20, 21, 21a) vorgesehen ist, dadurch gekennzeichnet, daß jeder Trennrahmen von den beiden Seiten (11, 11a) der Fördervorrichtung (10) beabstandet ist und parallel zu diesen beiden Seiten verläuft, und daß die an den Artikeln angreifende Schiene in Längsrichtung in eine Mehrzahl getrennter Abschnitte (60) unterteilt ist, und daß Mittel (62, 63, 63a, 65—68) vorgesehen sind, die die Abschnitte (60) jeweils mit einer festen oder einstellbaren Winkellage bezüglich der erwähnten Seite (11a) der Fördervorrichtung haltern.

2. Fördervorrichtung nach Anspruch 1, dadurch gekennzeichnet, daß die an den Artikeln angreifende Oberfläche der Schiene (60) glatt ist.

3. Fördervorrichtung nach Anspruch 1, dadurch gekennzeichnet, daß die Halterungsmittel jeweils ein Stützglied (62), das an einer Seite des Abschnitts (60) befestigt ist, und einen Bügel (65), der das Stützglied (62) an einer der Seiten (11a) befestigt, enthalten.

4. Fördervorrichtung nach einem der vorhergehenden Ansprüche, dadurch gekennzeichnet, daß mindestens einige der Abschnitte (60) bezüglich der erwähnten einen Seite (11a) geneigt sind, wobei das stromaufwärtige Ende des betreffenden Abschnitts zu der erwähnten einen Seite (11a) hin konvergiert.

5. Fördervorrichtung nach einem der vorhergehenden Ansprüche, dadurch gekennzeichnet, daß einige der geneigten Abschnitte (60) bezüglich der erwähnten einen Seite (11a) mit einem Winkel im Bereich von 15° bis 30° geneigt sind.

6. Fördervorrichtung nach einem der vorhergehenden Ansprüche, dadurch gekennzeichnet, daß die Abschnitte (60) bei den Bereichen, wo sich die Zonen überlappen, mit einem kleineren Winkel geneigt sind, als die Abschnitte (60) bei Bereichen zwischen den Überlappungen.

7. Fördervorrichtung nach einem der vorhergehenden Ansprüche, dadurch gekennzeichnet, daß die Halterungsmittel die Abschnitte (60) sowohl hinsichtlich des Neigungswinkels bezüglich der erwähnten einen Seite (11a) und ihres Abstandes von der erwähnten einen Seite (11a) seitlich der Fördervorrichtung (10) unabhängig voneinander zu verstellen gestatten.

8. Fördervorrichtung nach einem der vorhergehenden Ansprüche, dadurch gekennzeichnet, daß bestimmte Überlappungsbereiche mit einem Paar der erwähnten Trennrahmen (21, 21a) versehen sind, wobei die Rahmen des Paares parallel, voneinander seitlich beabstandet und in Längsrichtung der Fördervorrichtung (10) versetzt sind.

9. Fördervorrichtung nach Anspruch 8, dadurch gekennzeichnet, daß die benachbarten Enden der Trennrahmen (21, 21a) jedes Paares im Zwischenraum zwischen einem Paar von Rollen (12) gemeinsam sind, wobei die Demarkationslinie zwischen den Zonen Z-förmig ist und die zu den Rollen (12) parallele Linie zwischen den Trennrahmen (27, 27a) des betreffenden Paares verläuft.

10. Fördervorrichtung nach Anspruch 9, dadurch gekennzeichnet, daß die Überlappung zwischen der ersten und der zweiten Zone (A, B) am stromaufwärtigen Ende zwischen der Entladezone und der als nächstes benachbarten stromaufwärtigen Zone (F, G) beide einzelne Trennrahmen (20) aufweisen und die Überlappungen zwischen den mittleren Zonen (C, D, E) ein Paar von Trennrahmen (21, 21a) aufweisen.

11. Fördervorrichtung nach einem der vorhergehenden Ansprüche, dadurch gekennzeichnet, daß für die Rollen (12) in jeder Zone eine eigene Leistungseinrichtung (39) vorgesehen ist.

12. Fördervorrichtung nach einem der vorhergehenden Ansprüche, dadurch gekennzeichnet, daß die Halterungsmittel zur Änderung der Winkelbeziehungen zwischen den Abschnitten (60) und der erwähnten einen Seite (11a) verstellbar sind.

13. Fördervorrichtung nach einem der vorhergehenden Ansprüche, dadurch gekennzeichnet, daß die Halterungsmittel sowohl zur Änderung der Winkelbeziehung zwischen den Abschnitten (60) und der einen Seiten (11a) als auch zur Änderung der Abstände in seitlicher Richtung der Fördervorrichtung (10) zwischen den Abschnitten (60) und der erwähnten einen Seite (11a) verstellbar sind.

14. Sortierende Fördervorrichtung zum Sortieren und Ordnen ungeordnet zugeführter Artikel, mit Seiten (11, 11a) und einer Mehrzahl von parallelen Rollen (12), die mit bezüglich der Achsen der Seiten schrägstehenden Achsen zwischen den Seiten gelagert sind und eine langgestreckte Förderfläche bilden, wobei die Rollen (12) stromaufwärts von der Bewegungsrichtung der Artikel längs der Förderfläche zur einen Seite (11a) der Fördervorrichtung hin konvergieren und mit einer an den Artikeln angreifenden Scheine längs der erwähnten einen Seite (11a), dadurch gekennzeichnet, daß die Schiene in Längsrichtung in eine Mehrzahl von getrennten Abschnitten (60) unterteilt ist, und daß Mittel (62, 63, 63a, 65—68) vorgesehen sind, die die einzelnen Segmente (60) unabhängig mit einer festen oder verstellbaren Winkellage bezüglich der erwähnten Seite (11a) der Fördervorrichtung haltern.

15. Fördervorrichtung nach Anspruch 14, dadurch gekennzeichnet, daß einige der Abschnitte (60) bezüglich der erwähnten einen Seite (11a) geneigt sind, wobei ihr stromaufwärtiges Ende zu der erwähnten einen Seite hin konvergiert.

16. Fördervorrichtung nach Anspruch 15, dadurch gekennzeichnet, daß die an den Artikeln angreifende Oberfläche der Schiene glatt ist.

17. Fördervorrichtung nach einem der Ansprüche 14 bis 16, dadurch gekennzeichnet, daß die Halterungsmittel zur Änderung der Winkelbeziehungen zwischen den Abschnitten (60) und der erwähnten einen Seite (11a) verstellbar sind.

18. Fördervorrichtung nach einem der Ansprüche 14 bis 17, dadurch gekennzeichnet, daß die Halterungsmittel sowohl zur Änderung der Winkelbeziehungen zwischen den Abschnitten und der erwähnten einen Seite (11a) als auch zur Änderung der Abstände in seitlicher Richtung der Fördervorrichtung (10) zwischen den Abschnitten (60) und der erwähnten einen Seite (11a) der Fördervorrichtung verstellbar sind.

**Revendications**

1. Transporteur (10) pour la mise en order et l'arrangement d'articles reçus de façon désordonnée, le transporteur comportant des côtés (11, 11a) et une pluralité de rouleaux parallèles (12) montés entre les côtés avec leurs axes inclinés para rapport aux axes des côtés, les rouleaux (12) formant une surface allongée de transport où les rouleaux (12) placés en amont dans la direction de déplacement des articles le long de la surface convergent vers un côté (11a) du transporteur (10), ainsi qu'un rail de sollicitation d'articles placé le long du côté précité (11a), la surface étant divisée en une pluralité de zones (1—G) et des moyens d'entraînement (30, 39) étant prévus pour entraîner les rouleaux (12) de chaque zone à une vitesse qui augmente d'une zone à une autre, chacune des zones (A—G) chevauchant chaque zone adjacente dans le sens longitudinal de la surface et un châssis séparateur (20, 21, 21a) étant prévu dans chacune des régions de chevauchement, caractérisé en ce que chaque châssis séparateur est espacé de et s'étend parallèlement aux deux côtés (11, 11a) du transporteur (10), en ce que le rail de sollicitation d'articles est divisé sur sa longueur en une pluralité de segments séparés (50), et en ce qu'il est prévu des moyens (62, 63, 63a, 65—68) supportant indépendamment chacun des segments (60) dans une position angulaire fixe ou réglable par rapport audit côté (11a) du transporteur.

2. Transporteur selon la revendication 1, caractérisé en ce que la surface de sollicitation d'articles du rail (60) est lisse.

3. Transporteur selon la revendication 1, caractérisé en ce que chaque moyen de montage comprend un élément porteur (62) fixé sur ledit côté du segment (60) et une console (65) fixant l'élément porteur (62) sur un des côtés (11a).

4. Transporteur selon l'une quelconque des revendications précédentes, caractérisé en ce qu'au moins certains des segments (60) sont inclinés par rapport au côté précité (11a), leur extrémité d'amont convergeant en direction dudit côté (11a).

5. Transporteur selon l'une quelconque des revendications précédentes, caractérisé en ce que certains desdits segments inclinés (60) sont inclinés d'un angle compris entre 15 et 30° par rapport audit côté (11a).

6. Transporteur selon l'une quelconque des revendications précédentes, caractérisé en ce que les segments (60) adjacents aux régions où les zones se chevauchent sont inclinés d'un angle inférieur à celui des segments (60) adjacents à des régions situées entre les régions de chevauchement.

7. Transporteur selon l'une quelconque des revendications précédentes, caractérisé en ce que les moyens de montage permettent un réglage des segments (60) indépendamment l'un de l'autre à la fois en ce qui concerne leur angle d'inclinaison par rapport audit côté (11a) et leur espacement par rapport audit côté (11a) latéralement dans le transporteur (10).

8. Transporteur selon l'une quelconque des revendications précédentes, caractérisé en ce que certaines des régions de chevauchement sont pourvues d'une paire desdits châssis séparateurs (21, 21a), les châssis de la paire étant parallèles, latéralement espacé l'un de l'autre et décalés dans le sens de la longueur du transporteur (10).

9. Transporteur selon la revendication 8, caractérisé en ce que les extrémités adjacentes des châssis séparateurs (21, 21a) de chaque paire sont communs à l'espace entre les rouleaux (12) d'une paire de manière que la ligne de démarcation entre lesdites zones ait une forme de Z, la ligne orientée parallèlement auxdits rouleaux (12) s'étendant entre les châssis séparateurs (27, 27a) de la paire.

10. Transporteur selon la revendication 9, caractérisé en ce que les régions de chevauchement entre la première et la seconde zone (A, B) placée à l'extrémité d'amont et entre la zone de déchargement et la zone immédiatement adjacente en amont (F, G) comportent toutes deux chacune un seul châssis séparateur (20) et en ce que les régions de chevauchement entre les zones intermédiaires (C, D, E) comportent chacune deux châssis séparateurs (21, 21a).

11. Transporteur selon l'une quelconque des revendications précédentes, caractérisé en ce qu'il est prévu dans chaque zone un moyen d'entraînement séparé (39) pour les rouleaux (12).

12. Transporteur selon l'une quelconque des revendications précédentes, caractérisé en ce que les moyens porteurs sont réglables pour faire varier lres relations angulaires entre les segments (60) et ledit côté (11a).

13. Transporteur selon l'une quelconque des revendications précédentes, caractérisé en ce que le moyen porteur réglable à la fois pour faire varier la relation angulaire entre les segments (60) et ledit côté (11a) et pour faire varier les espacements, dans une direction latérale du transporteur (10) entre les segments (60) et ledit côté (11a).

14. Transporteur de mise en ordre pour assurer la mise en ordre et l'arrangement d'articles reçus de façon désordonnée, le transporteur (10) comportant des côtés (11, 11a) et une pluralité de rouleaux parallèles (12) montés entre les côtés avec leurs axes inclinés par rapport aux axes des côtés, les rouleaux (12) formant une surface allongée de transport où les rouleaux (12) placés en amont dans la direction de déplacement des articles le long de la surface convergent vers un côté (11a) du transporteur, ainsi qu'un rail de sollicitation d'article placé le long dudit côté (11a), caractérisé en ce que le rail est divisé sur sa longueur en une pluralité de segments séparés (60) et en ce qu'il est prévu des moyens (62, 63, 63a, 65—68) supportant indépendamment chacun des segments (60) dans une position angulaire fixe ou réglable par rapport audit côté (11a) du transporteur.

15. Transporteur selon la revendication 14, caractérisé en ce que certains desdits segments (60) sont inclinés par rapport audit côté (11a), leur extrémité d'amont convergeant vers ledit côté.

16. Transporteur selon la revendication 15, caractérisé en ce que la surface de sollicitation d'articles du rail est lisse.

17. Transporteur selon l'une quelconque des revendications 14 à 16, caractérisé en ce que les moyens porteurs sont réglables pour faire varier la relation angulaire entre les segments (60) et ledit côté (11a).

18. Transporteur selon l'une quelconque des revendications 14 à 17 caractérisé en ce que le moyen porteur est réglable à la fois pour faire varier la relation angulaire entre les segments (60) et ledit côté (11) et pour faire varier les espacements, dans une direction latérale du transporteur (10), entre les segments (60) et ledit côté (11a).

FIG I

FIG IA

FIG 2

FIG 5

FIG 3

0 021 782

2

FIG.7

FIG 9

FIG 8

FIG 6

FIG 4

FIG 10